# EUROPÄISCHE PATENTSCHRIFT

(11) **EP 0 877 988 B1**
(45) Veröffentlichungstag und Bekanntmachung des Hinweises auf die Patenterteilung: **24.03.2004**
(21) Anmeldenummer: 97948880.6
(22) Anmeldetag: 04.11.1997
(51) Int. Cl.: G06K 7/00

(54) **LESEGERÄT FÜR CHIPKARTEN**
READER FOR CHIP CARDS
LECTEUR POUR CARTES A PUCE

(30) Priorität: 05.11.1996 DE 19645460
(43) Veröffentlichungstag der Anmeldung: 18.11.1998
(73) Patentinhaber: Thomas & Betts GmbH, 63329 Egelsbach (DE)
(72) Erfinder: LOTZ, Reinhard, D-64390 Erzhausen (DE)
(74) Vertreter: Howick, Nicholas Keith
(86) Internationale Anmeldenummer: PCT/EP1997/006092
(87) Internationale Veröffentlichungsnummer: WO 1998/020441

(56) Entgegenhaltungen:
- EP-A- 0 749 088
- US-A- 4 814 593

## Beschreibung

Die Erfindung geht aus von einem Lesegerät für Chipkarten gemäß dem Oberbegriff des Patentanspruches 1.

Bei den bekannten Lesegeräten dieser Art erfolgt die Betätigung in der Weise, daß dis Chipkarte in den Schieber eingelegt und mit diesem - gegebenenfalls gegen die Wirkung einer sich spannenden Feder - bis zur Erreichung einer durch einen Anschlag festgelegten Endstellung eingeschoben wird, in der die Karte - unter gleichzeitiger Betätigung eines Endschalters - in ihre Lesestellung gebracht undin dieser fixiert wird. Die Entnahme erfolgt umgekehrt durch Lösen der die Karte in ihrer Endstellung haltenden Sperre, worauf sie unter der Wirkung der gespannten Feder selbsttätig ausgeworfen wird. Bei diesen - beispielsweise als Diebstahlssicherung oder zur Diebstahlsvorbeugung etwa in Autoradios eingesetzten - Geräten besteht im allgemeinen der Schieber aus transparentem Material, wobei der Schieber mit einer in ausgefahrener Stellung wirksam werdende Signaleinrichtung, in der Regel eine den Schieber anstrahlende Leuchtdiode, vorgesehen ist.

Das Dokument EP 0 749 088, das den Stand der Technik nach Art. 54(3) EPÜ wiedergibt, beschreibt ein Lesegerät für Chipkarten mit einem Unterteil und einem abnehmbaren Oberteil. Die Karte wird durch eine Öffnung eingeführt und von einem gleitenden, mit einer Sprungfeder versehenen Träger getragen. Das Unterteil hat feste und schiebare Kontakte, und der gleitende Träger wird von seitlichen Blattfedern zentriert und treibt eine Stange, die eine Scharte am unteren Ende hat, vorwärts. Die Scharte paßt in einen Schnitt, der sich in einer Schiene im Unterteil befindet, und die Form der Schiene zusammen mit der Sprungfeder schafft zwei stabile Positionen.

US Patent Nummer 4 814 593, das den Oberbegriff des Anspruches 1 bildet, beschreibt ein Kontaktgerät für eine Chipkarte bestehend aus einem Gehäuse, einem Kartenträger und einer Sperrung, die den Kartenträger in einer Position zum Karten Lesen halten kann. Die Sperrung hat einen Mechanismus, der es dem Kartenträger erlaubt sich zu bewegen. Dieser Mechanismus hat einen Dorn, der in eine herzförmige Furche hineinragt.

Die bekannten Lesegeräte haben sich in der Praxis gut bewährt, besitzen jedoch eine in vielen Fällen ihren Einsatz erschwerende oder gelegentlich auch auschließende Bauhöhe.

Ziel der vorliegenden Erfindung ist demgemäß die Schaffung eines die Ausübung einer optischen Signalwirkung ermöglichenden Lesegerätes für Chipkarten, das bei geringer Bauhöhe eine preiswerte Herstellung ermöglicht.

Diese Aufgabe wird mit einem Leser für Chipkarten mit den im Patentanspruch 1 wiedergegebenen Merkmalen gelöst.

Durch die Erfindung ist ein Leser für Chipkarten geschaffen, bei dem das im allgemeinen als Gehäusedeckel dienende Unterteil gleichzeitig den der Einführung der Chipkarte dienende Schieber bildet und der auf diese Weise mit einer außerordentlich geringe Bauhöhe hergestellt werden kann. Darüberhinaus ist der Rahmen konstruktiv einfach und daher kostengünstig herstellbar im Hinblick darauf, daß er aus lediglich zwei durch einfaches Zusammenstecken miteinander verbindbaren Teilen besteht. Er erlaubt daher auch im Hinblick darauf, daß das Gehäuse wegen der Transparenz des Schiebers aus unterschiedlichen Materialien besteht, eine an die sonstigen Anforderungen, beispielsweise die geforderten Führungseigenschaften, optimal angepaßte Materialwahl.

Weitere Einzelheiten der in den Patentansprüchen gekennzeichneten Erfindung werden nachstehend anhand der beigefügten Zeichnung erläutert. Es zeigen
- Fig. 1: die perspektivische Darstellung eines Kontaktträger-Rahmens in Nullstellung
- Fig. 2: den in Fig. 1 wiedergegebenen Gehäuse in Lesestellung
- Fig. 3: eine Sicht von unten auf den in in Fig. 1 wiedergegebenen Gehäuse
- Fig. 4: eine Sicht auf eine andere Ausführungsform eines Kontaktträgerrahmens
- Fig. 5: eine Sicht von der rechten Seite auf Fig. 4

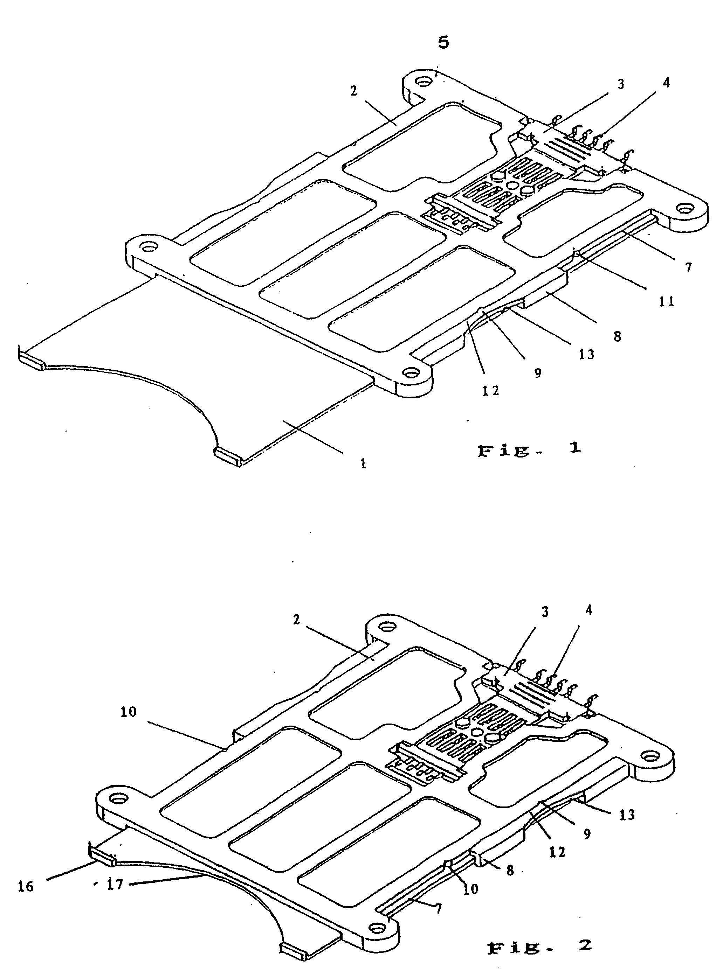

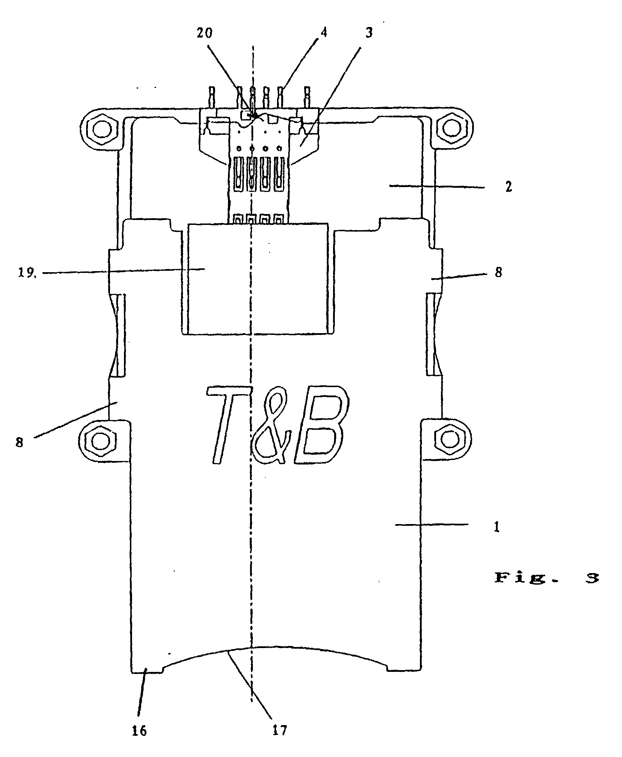

Das in den Fig. 1 - 3 der Zeichnung wiedergegebene Lesegerät für Chipkarten besteht aus einem zweiteilig aus einem Unterteil 1 und einem zur Befestigung auf einer Leiterplatte bestimmten Oberteil 2 ausgebildeten Gehäuse. Im Falle dieser Ausführungsform sind die Kontakte 4 zusammen mit einem Kontaktträger in das Gehäuseoberteil eingeclipst und sind somit ein integraler Bestandteil des Gehäuseoberteils 2. Die Kontakte 4 sind über einen Endschalter 20 mit jeweils einer - in der Zeichnung nicht dargestellten - Kontaktzuführung verbunden. Das Rahmenunterteil 1 ist als ein der Einführung der Chipkarte in das Gerät dienender Schieber ausgebildet, der auf dem Rahmenoberteil 2 zwischen zwei Raststellungen verschieblich geführt ist, von denen die eine Raststellung die Einlege- bzw. Entnahmestellung und die andere Raststellung die Lesestellung für die Chipkarte definieren.

Zu diesem Zweck sind das Rahmenoberteil 2 beidseitig mit einer Schiene 7 als Führung und das Rahmenunterteil 1 mit jeweils einem Schlitten 8 in Form einer die Führungsschiene 7 umgreifenden, in ihrem Mittelbereich fensterartig geöffneten Nutleiste versehen, die aufgrund ihrer fensterartigen Öffnung 13 einen federnden Steg 12 bildet, an dem eine Rastnase 9 angeformt ist. Im Rahmenoberteil 2 sind zwei Rasten 10 und 11 ausgebildet, von denen die Raste 10 die äußere der Ladestellung entsprechende Endstellung und die Raste 11 die innere, der Lesestellung entsprechende Endstellung des Schiebers definiert.

Das Gehäuseoberteil 2 ist mit Anschlägen 5 versehen, die eine Verschiebung des Schlittens 1 über seine Raststellungen 9/10, 9/11 hinaus verhindern und zur Erleichterung des Zusammenfügens der beiden Teile um seine sich parallel zu den Führungsschienen (7) erstreckende Längsachse biegbar ausgebildet. Die Anschläge 5 sind mit Bohrungen versehen, die die Verschraubung des Gehäuseoberteils auf einem Träger, beispielsweise einer Leiterplatte, ermöglichen. Aufgrund dieser Ausbildung des Lesegerätes ist ein Abclipsen des Schiebers 1 von seinen Führungen nach der Verschraubung des Gehäuseoberteils auf seinem Träger ausgeschlossen und somit eine absolut sichere Verbindung der beiden in der Einbaulage gewährleistet, insofern, als die Verschraubung das Verbiegen des Gehäuseoberteils - etwa durch Querzug an dem Schieber - und damit auch ein Abspringen des Schlittens von seiner Führung verhindert. Eine derartige Beanspruchung führt vielmehr zu einem verstärkten Einzug der Schlitten 8 auf ihre Führungen.

Es ist weiterhin der Schieber 1 an den Enden seiner äußeren Kante mit Mitnehmer-Anschlägen 16 für die Chipkarte und im Bereich zwischen den Mitnehmer-Anschlägen 16 mit einer das Erfassen der Chipkarte erleichternden Griffausnehmung 17 versehen.

Zum Einschieben der Chipkarte in die Lesestellung wird die Karte in der in Fig. 1 wiedergegebenen Stellung des Lesers in den Schieber 1 eingelegt und unter leichtem Druck in den Leser eingeschoben. Hierbei gleiten die Rastnasen 9 unter elastischer Ausbiegung der Stege 12 aus ihren Rasten 10 aus und gleiten auf der jeweils zugeordneten Seitenfläche des Rahmen-Oberteils 2 bis zum Einrasten in die die Lesestellung definierenden Rasten 11. Die Karte befindet sich damit in der Lesestellung. Das Ziehen der Chipkarte erfolgt entsprechend in umgekehrter Reihenfolge, wobei die Karte aufgrund der Griffausnehmung 17 leicht erfaßt werden kann und den Schieber 1 beim Ziehen aufgrund des Anschlages an den Mitnehmer-Anschlägen 16 mitnimmt. Es ist aus der Zeichnung in Verbindung mit der vorstehenden Erläuterung ohne weiteres erkennbar, daß sowohl das Einschieben des die Chipkarte enthaltenden Schiebers 1 in die Lesestellung als auch dessen Rückführung in die Entnahmestellung ausschließlich durch Handbetätigung und lediglich gegen die von den federnden Stegen 12 ausgeübten, eine Reibwirkung verursachenden Querkraft erfolgt, wobei die Stege 12 keinerlei Wirkung auf die Karte ausüben.

Der Schieber 1 ist bei der in der Zeichnung wiedergegebenen Ausführungsform an seiner inneren Kante mit einem in die Chipkarten-Ebene einragenden, beim Einlegen der Chipkarte ausrückbaren, auf den Endschalter 20 wirkenden Betätigungselement 19, im Beispielsfalle einem in einem Stück an den Schieber angeformten schräg in die Kartenebene einragenden Ausriß versehen, der sich beim Einlegen bzw. Einschieben der Chipkarte in den Schieber 1 elastisch in die Schieberebene ausbiegt. Es kann jedoch auch jede andere geeignete, den Endschalter 20 unter der gegebenen Bedingung betätigende Einrichtung vorgesehen sein. Einerseits übt das in dieser Weise angeordnete Betätigungselement einen Druck auf die Chipkarte aus und hält damit in der Lesestellung das Kontaktfeld des Chips fest gegen die Kontakte. Andererseits ist die Einrichtung von großem Vorteil bei Lesegeräten, in denen - wie etwa häufig bei Auto-Radiogeräten - beim Öffnen des Endschalters durch Ziehen der Chipkarte eine Signaleinrichtung eingeschaltet wird, die die Außerfunktion-Setzung des Lesegerätes optisch oder akustisch anzeigt. In diesen Fällen kann mit Hilfe des in dieser Weise ausgebildeten Schiebers durch einfaches Eindrücken des Schiebers die Signal-Einrichtung außer Betrieb gesetzt werden, ohne daß hiermit die Inbetriebnahme des gesteuerten Gerätes, also etwa des Radiogerätes, verbunden ist. Bei den bekannten Lesegeräten ist dies nur durch Verwendung einer Blindkarte möglich.

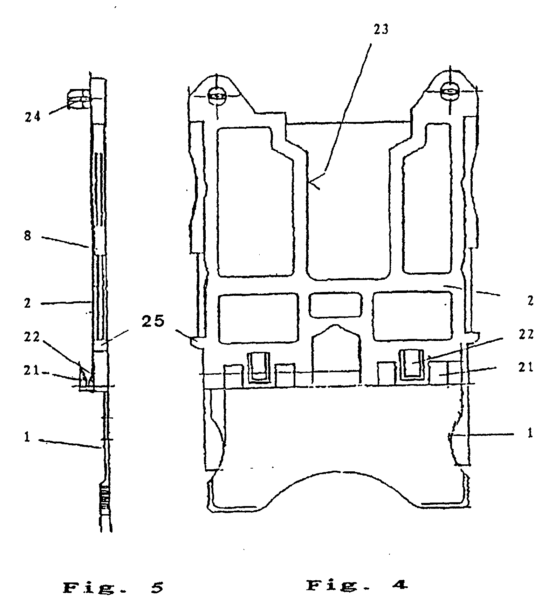

Eine weitere Ausführungsform ist in den Fig. 4 und 5 wiedergegeben. In diesem Falle bilden die Kontakte nicht einen integralen Bestandteil des Gehäuseoberteils, sondern sind hiervon unabhängig auf der Leiterplatte befestigt, aus welchem Grunde das Gehäuse ein entsprechend vergrößertes Fenster 23 aufweist, das nach der Montage den Kontaktträger mit allseitigem Spiel umfaßt. Im Falle dieser Ausführungsform ist das Oberteil 2 zur Befestigung auf der Leiterplatte 2 an seiner vorderen Kante, anstelle der gleichzeitig als Befestigungsösen dienenden Anschläge 5, mit Anschlägen 25 und gesonderten, das Umgreifen der Leiterplatte ermöglichenden Haken 21 und in deren Nähe mit Federelementen 22, sowie weiterhin an ihrer hinteren Kante mit in eine Öffnung der Leiterplatte einsteckbaren Spreiz-Clips 22 versehen. Die Montage des Lesegerätes vereinfacht sich auf diese Weise außerordentlich insofern, als es lediglich des Einhängens der Haken 21 auf den Rand der Leiterplatte und des Einclipsens der Spreiz-Clips in die hierfür vorgesehenen Lochungen der Leiterplatte bedarf, wobei die Federelemente 22 das Lesegerät unabhängig von der systembedingt unterschiedlichen Dicke der Leiterplatte und eventuellen Fertigungstoleranzen unter Spannung und damit in einer stabilen Lage halten. Erforderlichenfalls kann eine weitere Sicherung gegen unbeabsichtigtes Lösen der Verbindung durch axiales Eindrehen einer Schraube und damit Aufspreizung des Clips nach Art eines Spreiz-Dübels realisiert werden, durch den der Clip in seiner Bohrung unlösbar fixiert wird.

Das Oberteil 2 ist schließlich mit einer Ausnehmung 26 versehen, deren in Schieberichtung gelegene Kante 27 eine konisch spitz auslaufende Form aufweist. Derartige Ausnehmungen in Form eines Fensters oder einer trogartigen Vertiefung werden häufig zum Zwecke der Materialeinsparung oder Schaffung einer Durchbrechung eingesetzt, um einen Zugriff zu der darunterliegenden Leiter- oder Montageplatte zu ermöglichen. Sie können zu Schwierigkeiten führen insofern, als die - nach längerem Gebrauch häufig verformte - Chipkarte an der vorderen Kante der Ausnehmung anschlägt und damit ein Einführen in die Leselage nicht mehr möglich oder zumindest stark erschwert. Durch die konisch spitz zulaufende Form der Ausnehmung, an der die Karte beim Einschieben aufgleitet, wird eine ungehinderte Einführung auch im Falle einer starken Verformung gewährleistet.

## Patentansprüche

1. Gerät zum Lesen von Chipkarten mit einer Anzahl von Kontaktfeldern und mit einem zweiteilig aus einem Unterteil (1) und einem Oberteil (2) bestehenden, einen Einschubschlitz einschließenden Gehäuse, dessen Oberteil (2) der Befestigung auf einer Leiter- oder Montageplatte dient und einen Kontaktträger (3) mit einer der Zahl der Kontaktfelder des Chips entsprechenden Zahl von über einen Endschalter (20) mit jeweils einer Kontaktzuführung verbundenen Kontaktpaaren (4) enthält, sowie einem gegebenenfalls federbeaufschlagten, der Einführung der Chipkarten in die Lesestellung dienenden Schieber, wobei das Rahmenunterteil (1) als ein auf dem Rahmenoberteil (2) zwischen zwei Raststellungen verschieblich geführter Schieber ausgebildet ist, von denen die eine Raststellung die Einlege- bzw. Entnahmestellung und die andere Raststellung die Lesestellung für die Chipkarte definieren, und wobei das Rahmenoberteil (2) mit einer Führung (7) und das Rahmenunterteil (1) mit einem auf einem Teil seiner Länge elastisch auslenkbaren, auf der Führung (7) verschieblichen Schlitten (8) versehen sind, dessen elastisch auslenkbarer Bereich eine Rastnase (9) aufweist, die mit zwei den Endstellungen des Schlittens (8) entsprechenden, im Rahmenoberteil (2) ausgebildeten Rasten (10, 11) zusammenwirkt, **dadurch gekennzeichnet, daß** die Führungen von beidseitig seitlich am Rahmenoberteil (2) ausgebildeten Schienen (7) und die Schlitten (8) von am Rahmenunterteil (1) angeordneten, die Führungsschienen (7) umgreifenden Nutleisten gebildet sind, die in ihrem die Rastnase (9) tragenden Mittelbereich mit einem federnde Stege (12) bildenden Fenster (13) versehen sind.

2. Lesegerät für Chipkarten nach Anspruch 1, **dadurch gekennzeichnet, daß** das Rahmenoberteil mit einer oder mehreren weiteren, jeweils eine Zwischenposition definierenden Rasten für die Rastnase (9) versehen ist.

3. Lesegerät für Chipkarten nach Anspruch 1 oder 2, **dadurch gekennzeichnet, daß** das Gehäuseoberteil (2) um eine sich parallel zu den Führungsschienen (7) erstreckende Linie biegbar ausgebildet und mit Anschlägen (5) versehen ist, die eine Verschiebung des Schlittens (1) über seine Raststellungen (9/10, 9/11) hinaus verhindern.

4. Lesegerät für Chipkarten Anspruch 3, **dadurch gekennzeichnet, daß** die Anschläge (5) mit Bohrungen versehen sind, die die Befestigung des Gehäuseoberteils auf einer Leiter- oder Montageplatte, ermöglichen.

5. Lesegerät für Chipkarten nach einem der Ansprüche 1 bis 4, **dadurch gekennzeichnet, daß** der Schieber (1) an seiner inneren Kante mit einem in die Chipkarten-Ebene einragenden, beim Einlegen der Chipkarte ausrückbaren Betätigungselement (19) versehen ist, mit dessen Hilfe der Endschalter (20) beim Eindrücken des leeren, d.h. keine Chipkarte enthaltenden Schiebers (1) in der Lesestellung betätigt wird.

6. Lesegerät für Chipkarten Anspruch 5, **dadurch gekennzeichnet, daß** das Betätigungselement (19) von einem schräg in die Kartenebene einragenden elastisch auslenkbaren Ausriß des Schiebers (1) gebildet ist.

7. Lesegerät für Chipkarten nach einem der Ansprüche 1 bis 6, **dadurch gekennzeichnet, daß** das Oberteil (2) an seiner einen Kante mit das Umgreifen eines Trägers, beispielsweise einer Leiterplatte, ermöglichenden Haken (21) und in deren Nähe mit Federelementen (22) sowie weiterhin in einem von der Kante entfernten Bereich mit in eine Öffnung des Trägers einsteckbaren Spreiz-Clips (22) versehen ist.

8. Lesegerät für Chipkarten nach einem der Ansprüche 1 bis 7, **dadurch gekennzeichnet, daß** das Oberteil (2) und/oder der Schieber (1) mit Fenstern oder trogartigen Vertiefungen (26) versehen sind, deren in Schieberichtung gelegene Kante (27) eine konisch spitz auslaufende Form aufweist.

## Claims

1. Device for reading chip cards with a number of contact areas and with a housing comprising two parts, a lower part (1) and an upper part (2), and enclosing a plug-in slot, the upper part (2) of which serves for fastening on a printed circuit board or mounting plate and contains a contact carrier (3) with a number of pairs of contacts (4), corresponding to the number of contact areas of the chip, which pairs of contacts are connected via a limit switch (20) in each case to a contact lead, and also a possibly spring-biased slide, serving for bringing the chip cards into the reading position, the lower frame part (1) being formed as a slide guided displaceably on the upper frame part (2) between two detent positions, of which one detent position defines the insertion and removal position and the other detent position defines the reading position for the chip card, and the upper frame part (2) being provided with a guide (7) and the lower frame part (1) being provided with a carriage (8) which can be resiliently deflected over part of its length, is displaceable on the guide (7) and the resiliently deflectable region of which has a detent lug (9) which interacts with two detents (10, 11) formed in the upper frame part (2) and corresponding to the end positions of the carriage (8), **characterized in that** the guides are formed by rails (7) formed laterally on both sides of the upper frame part (2) and the carriages (8) are formed by slotted strips arranged on the lower frame part (1) and engaging around the guide rails (7), which strips are provided in their middle region, bearing the detent lug (9), with a window (13) forming resilient webs (12).

2. Reader for chip cards according to Claim 1, **characterized in that** the upper frame part is provided with one or more further detents, respectively defining an intermediate position, for the detent lug (9).

3. Reader for chip cards according to Claim 1 or 2, **characterized in that** the upper housing part (2) is formed such that it can bend about a line extending parallel to the guide rails (7) and is provided with stops (5), which prevent a displacement of the carriage (8) beyond its detent positions (9/10, 9/11).

4. Reader for chip cards according to Claim 3, **characterized in that** the stops (5) are provided with drilled holes which permit the fastening of the upper housing part on a printed circuit board or mounting plate.

5. Reader for chip cards according to one of Claims 1 to 4, **characterized in that** the slide (1) is provided on its inner edge with an actuating element (19) which projects into the chip card plane, can be moved downwards upon insertion of the chip card and with the aid of which the limit switch (20) is actuated upon insertion of the slide (1) when empty, i.e. not containing a chip card, in the reading position.

6. Reader for chip cards according to Claim 5, **characterized in that** the actuating element (19) is formed by a tearout of the slide (1) which projects obliquely into the card plane and can be flexibly deflected.

7. Reader for chip cards according to one of Claims 1 to 6, **characterized in that** the upper part (2) is provided on one of its edges with hooks (21) permitting engagement around a support, for example a printed circuit board, and in the vicinity of the said hooks, with spring elements (22) and also furthermore, in a region remote from the edge, with spreading clips (22) which can be inserted into an opening of the support.

8. Reader for chip cards according to one of Claims 1 to 7, **characterized in that** the upper part (2) and/or the slide (1) are provided with windows or trough-like recesses (26), the edge (27) of which in the sliding direction has a conically pointed form.

## Revendications

1. Appareil de lecture ou lecteur pour cartes à puce comprenant un certain nombres de champs de contact et un boîtier en deux parties constitué d'une partie inférieure (1) et d'une partie supérieure (2) et présentant une fente d'insertion, la partie supérieure (2) du boîtier servant à la fixation sur une plaque de circuit imprimé ou plaque de montage et comportant un support de contacts (3) avec un nombre correspondant au nombre des champs de contact de la puce, de paires de contacts (4) reliées par un commutateur de fin de course (20) respectivement à une alimentation de contact, le lecteur comprenant également un tiroir, le cas échéant sollicité par ressort et servant à l'introduction des cartes à puce dans la position de lecture, la partie de de cadre inférieure (1) étant réalisée en tant que tiroir guidé de manière coulissante sur la partie de cadre supérieure (2), entre deux positions d'encliquetage, dont une position d'encliquetage définit la position de mise en place ou de retrait et l'autre position d'encliquetage la position de lecture pour la carte à puce, et la partie de cadre supérieure (2) étant pourvue d'un guidage (7) et la partie de cadre inférieure (1) d'un chariot (8) susceptible de coulisser sur le guidage (7) et d'être dévié de manière élastique sur une partie de sa longueur, et dont la zone pouvant être déviée de manière élastique présente un talon d'encliquetage (9) qui coopère avec deux crans d'encliquetage (10, 11) formés dans la partie de cadre supérieure (2) et correspondant aux positions extrêmes du chariot (8),
**caractérisé en ce que** les guidages sont réalisés par des rails (7) de part et d'autre, latéralement, sur la partie supérieure de cadre (2), et les chariots (8) sont réalisés par des barres à rainure agencées sur la partie de cadre inférieure (1) et qui entourent les rails de guidage (7) et sont pourvues dans leur zone centrale portant le talon d'encliquetage (9), d'une fenêtre (13) formant des nervures élastiques (12).

2. Lecteur pour cartes à puce selon la revendication 1, **caractérisé en ce que** la partie de cadre supérieure est pourvue d'un ou de plusieurs autres crans d'encliquetage destinés au talon d'encliquetage (9) et définissant chacun une position intermédiaire respective.

3. Lecteur pour cartes à puce selon la revendication 1 ou 2, **caractérisé en ce que** la partie de boîtier supérieure (2) est réalisée de manière à être flexible autour d'une ligne s'étendant parallèlement aux rails de guidage (7) et est pourvue de butées (5) qui empêchent un coulissement du chariot (1) au-delà de ses positions d'encliquetage (9/10, 9/11).

4. Lecteur pour cartes à puce selon la revendication 3, **caractérisé en ce que** les butées (5) sont pourvues de perçages qui permettent la fixation de la partie de boîtier supérieure sur une plaque de circuit imprimé ou de montage.

5. Lecteur pour cartes à puce selon l'une des revendications 1 à 4, **caractérisé en ce que** le tiroir (1) est pourvu, sur son bord intérieur, d'un élément d'actionnement (19) faisant saillie dans le plan de la carte à puce et pouvant être dévié vers l'extérieur lors de l'insertion des cartes à puce, et à l'aide duquel est actionné le commutateur de fin de course (20) lors de la rentrée du tiroir (1) vide, c'est à dire ne contenant pas de carte à puce, dans la position de lecture.

6. Lecteur pour cartes à puce selon la revendication 5, **caractérisé en ce que** l'élément d'actionnement (19) est formé par une découpe partielle du tiroir (1) s'engageant de manière oblique dans le plan de la carte et pouvant être déviée de manière élastique.

7. Lecteur pour cartes à puce selon l'une des revendications 1 à 6, **caractérisé en ce que** la partie supérieure (2) est pourvue sur un de ses bords, d'un crochet (21) permettant d' enserrer un support, par exemple une plaque de circuit imprimé, et à sa proximité, des éléments élastiques (22), ainsi qu'en outre, dans une zone éloignée du bord, des plots expansibles (24) pouvant être engagés dans une ouverture du support.

8. Lecteur pour cartes à puce selon l'une des revendications 1 à 7, **caractérisé en ce que** la partie supérieure(2) et/ou le tiroir (1) sont pourvues de fenêtres ou de creux en auge (26) dont le bord (27) placé dans la direction du coulissement, présente une forme se terminant en pointe de manière conique.
